# EUROPEAN PATENT SPECIFICATION

(11) **EP 2 167 872 B1**
(45) Date of publication and mention of the grant of the patent: **24.02.2016**
(21) Application number: 07795444.4
(22) Date of filing: 29.05.2007
(51) Int. Cl.: F22B 35/00, F01K 25/10, F22B 1/18, F27D 17/00, F02G 5/02

(54) **ORGANIC RANKINE CYCLE POWER PLANT AND METHOD OF CONTROLLING THE FLOW OF HOT GASES THERETO**
KRAFTWERK MIT EINEM ORGANISCHEN RANKINE-KREISPROZESS UND REGELUNGSVERFAHREN FÜR DEN ZUSTROM VON HEISSGAS ZU EINEM SOLCHEN KRAFTWERK
INSTALLATION À BASE DE CYCLE DE RANKINE ORGANIQUE ET PROCÉDÉ DE CONTRÔLE D'UN FLUX DE GAZ CHAUD À UNE TELLE INSTALLATION

(43) Date of publication of application: 31.03.2010
(73) Proprietor: United Technologies Corporation, Farmington, CT 06032 (US)
(72) Inventor: ISOM, Joshua, D., South Windsor, CT 06074 (US); MCCORD, Kent, R., Granby, CT 06035 (US)
(74) Representative: Leckey, David Herbert
(86) International application number: PCT/US2007/012652
(87) International publication number: WO 2008/153517

(56) References cited:
- EP-A- 1 221 573
- WO-A-83/01651
- FR-A- 2 316 569
- US-A- 1 707 964
- US-A- 4 113 005
- US-A1- 2004 255 585

## Description

### Background of the Invention

This invention relates generally to rankine cycle systems and, more particularly, to a method and apparatus for controlling the flow of hot gases to the evaporator thereof.

Organic rankine cycle power plants can be used to convert heat contained in a hot gas stream, to electricity. Such a power plant comprises a boiler or evaporator for vaporizing an organic working fluid, a turbine responsive to vaporized working fluid produced by the evaporator for expanding the vapor and producing work, a generator coupled to the turbine for converting work produced thereby into electrical energy, and a condenser for condensing expanded vaporized working fluid exhausted from the turbine and producing condensate that is returned to the boiler either by pump or under the influence of gravity.

The hot gas stream that is applied to the evaporator can come from a variety of sources, such as, for example, flares, reciprocating engine exhaust, thermal oxidizer exhaust and from various types of industrial processes such as a chemical or manufacturing process. Accordingly, the pressure and flow characteristics of the hot gas stream will vary substantially with the source type and site. There is thus a need to control the hot source flow rate and, particularly, to ensure that no hot gas flow passes through the evaporator when the power plant is in a non-operational mode.

An organic rankine cycle power plant having the features of the preamble of claim 1 is disclosed in EP-A-1221573. A further organic rankine cycle power plant is disclosed in US 2004/025585 A1.

### Summary of the Invention

In accordance with one aspect of the invention, there is provided an organic rankine cycle power plant as set forth in claim 1.

The flow modulation device may comprise a blower on the downstream side of the evaporator. The blower is selectively enabled by a digital signal and its speed is controlled by an analog signal, with both signals being provided by a controller.

The flow modulation device may comprise a valve disposed between the thermal source and the evaporator. The valve is enabled by a digital signal from the control and its position is regulated by way of an analog signal from the control.

In the drawings as hereinafter described, preferred and alternate embodiments are depicted; however, various other modifications and alternate constructions can be made thereto without departing from the spirit and scope of the invention.

### Brief Description of the Drawings

FIG. 1 is a schematic illustration of a rankine cycle power plant with the present invention incorporated therein.
FIG. 2 is a schematic illustration thereof in accordance with one embodiment of the invention.
FIG. 3 is a schematic illustration thereof in accordance with another embodiment thereof.
FIG. 4 is a schematic illustration of yet another embodiment thereof.

### Detailed Description of the Invention

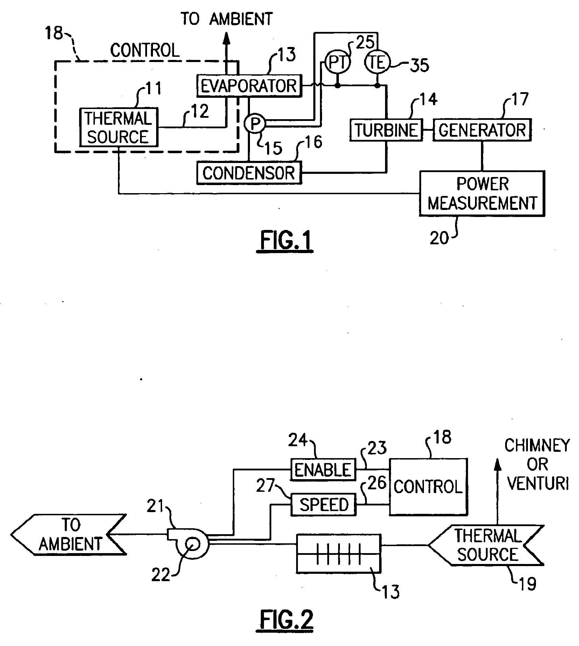

An organic rankine cycle power plant is shown in Fig. 1 to include a thermal source 11 which provides a hot gas stream as indicated by the line 12 to a boiler or evaporator 13, with the exhaust then eventually flowing to ambient The evaporator 13 provides a heat exchange relationship with a working fluid which is changed from a liquid to a vapor in the process.

The working fluid flows through a closed circuit system which includes, in addition to the evaporator 13, a turbine 14, a condenser 16 and a pump 15. The vapor therefore passes from the evaporator 13 to the turbine 14 to provide motive power thereto, and the expanded vapor from the turbine 14 then passes to the condenser 16 where it is condensed to a liquid which then flows back to the evaporator 13. The turbine 14 is applied to power a generator 17 to generate electricity in a conventional manner.

As discussed hereinabove, because of the wide variety of thermal sources 11, and their associated different pressures and flow characteristics, the applicants have recognized the desirability of controlling the hot side evaporator flow in such a manner that the evaporator 13 operates in an effective and efficient manner and further that the evaporator 13 is not being heated during periods in which the organic rankine cycle power plant is not in operation. This is accomplished by way of control mechanism 18 indicated by the dashed lines in Fig. 1.

The control mechanism 18 is designed, and is intended to be used in a manner such that it can accommodate a wide variety of thermal sources 11 with little or no reconfiguration of the control mechanism 18.

Referring now to Fig. 2, the control mechanism 18 is shown as incorporated in a rankine cycle power plant having its evaporator 13 heated by a thermal source 19 that includes a chimney or venturi through which the hot gases can flow to ambient. The chimney effect induced by buoyancy of the hot gases or the suction effect produced by passing hot gases through a narrow flow passage prevents hot gas from traveling to the evaporator. In fact, cool ambient air is drawn through the evaporator and back into the thermal source. However, during operation of the power plant, a blower 21 is operated to draw the hot gases through the evaporator 13 where they are applied to change the liquid into vapor, with the exhaust gases then being passed to ambient. The blower 21 is powered by a variable speed drive 22 so as to selectively vary the speed of the blower 21 to control turbine inlet pressure and generator power while accommodating the pressure and flow characteristics of the thermal source 19.

The control 18 is designed to place the variable speed drive 22 in an on or off condition and further too selectively vary the speed thereof. This is accomplished by two separate signals from the control, one being a digital signal and the other being an analog signal. That is, the control 18 is adapted to send a digital signal along line 23 to an enable or disenable the mechanism 24, or as to turn the variable speed drive 22 on or off. The control also selectively sends an analog signal along line 26 to a speed control mechanism 27 to selectively control the speed of the variable speed drive 22.

In operation, when it is desired that the power plant is not to be operational, the control 18 sends a digital signal along line 23 to cause the enable mechanism 24 to turn off the variable speed drive 22 and the fan 21 so that no hot gases are being drawn through the evaporator 13. Under these conditions, if the thermal source 19 is activated, all of the hot gases are passed through the chimney or venturi. When it is desired that the power plant be operational, the control 18 sends a digital signal along line 23 to the enable mechanism 24 to turn on the variable speed drive 22. At the same time, an analog signal is sent along line 26 to the speed control mechanism 27 to selectively vary the speed of the variable speed drive 22 so as to control the pressure and flow characteristics of the hot gases flowing through the evaporator 13 to thereby accommodate the particular characteristics of the thermal source 19. The thermal source flow rate is modulated to produce the desired turbine power output as determined by the power measurement device 20 as shown in Fig. 1. The pump 15 in the organic rankine cycle modulates organic fluid flow rate to maintain superheat of the working fluid at the turbine inlet as determined by the sensors 25 and 35 as shown in Fig. 1.

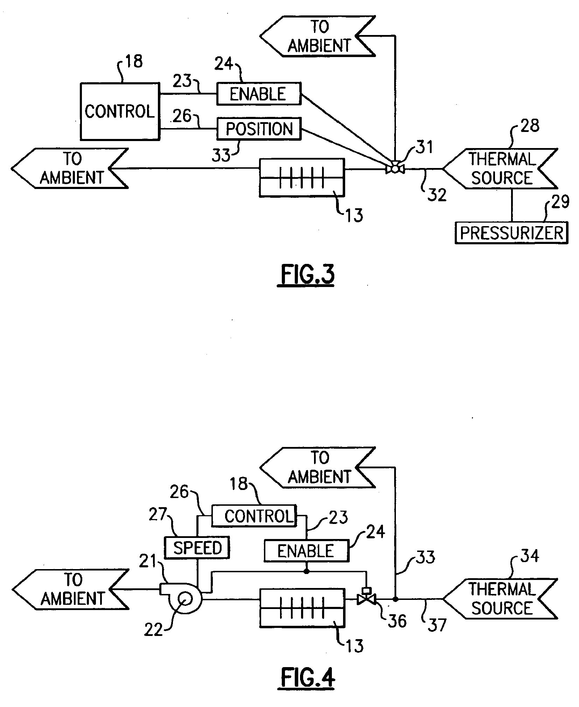

In the Fig. 3 embodiment, the thermal source 28 is pressurized by a pressurizer 29, which may be a blower or the like or, more often, the pressurization may be a natural feature of the source of the heat. For example, turbine exhaust or reciprocating engine exhaust is often pressurized. Thus, given a direct open line between the thermal source 28 and the evaporator 13, the pressurizer 29 will cause the hot gas steam to flow through the evaporator 13 and then to ambient. A diverter valve 31 is placed in the line 32 between the thermal source 28 and the evaporator 13. The diverter valve 31 is a variable position device which is normally in a full bypass position. Accordingly, unless acted on by the control 18, the diverter valve 31 will divert all of the hot gas stream from the thermal source 28 to ambient as shown.

The control 18 and its associated components are the same as described hereinabove, but rather than acting on the variable speed blower, they act to operate the diverter valve 31. That is, the enable mechanism 24 is initiated by a digital signal along line 23 to enable a movement of the diverter valve from its normally full bypass position. Similarly, the analog signal is sent from the control 18 along line 26 to the position mechanism 33 to selectively vary the position of the diverter valve 31 so as to selectively adjust the pressure and flow characteristics of the hot gas stream from the thermal source 28. In this regard, it should be recognized that the position mechanism 33 as shown in Fig. 3 could be identical to the speed control mechanism 27 of the Fig. 2 embodiment, inasmuch as they both are applied to adjust the mechanical position of the device being controlled (i.e. either the variable speed drive 22 or the diverter valve 31) in order to vary flow and thus control generator power output.

In the Fig. 4 embodiment, the thermal source 34 is non-pressurized and has no chimney or venturi. Accordingly, the blower 21 with a variable speed drive 22 is provided downstream of the evaporator 13 in same manner as shown in the Fig. 2 embodiment. Further, the variable speed drive is modulated by the control 18 in the same manner as described with respect to Fig. 2 above.

The valve 36, which is placed in the line 37 between the thermal source 34 and the evaporator 13 is a normally closed shut-off valve which, unless caused to operate by the control 18, prevents the flow of hot gases to the evaporator 13 and allows them to flow from the thermal source 34 to the line 37 and the vent line 38 to ambient as shown.

The enable mechanism 24, in addition to enabling the variable speed drive 22, is connected to enable the valve 36. Thus, when the normally closed valve 36 is enabled, it is moved to the fully opened position. The pressure and flow characteristics of the hot gas flow from the thermal source to the evaporator 13 is then controlled by the speed of the variable speed drive 22 in a manner as described hereinabove.

It should be recognized that, for the three different types of thermal source 19, 28 and 34 as described hereinabove, the control 18 and its associated components are substantially identical and include provisions for generating a digital signal to either enable or disenable a mechanism, and for generating an analog signal for modulation of the position of the mechanism to control the pressure and flow characteristics of the hot side evaporator flow. The digital signal, when in the disenable mode, ensures that no heat is applied to the evaporator when the power plant is not running. In this way, a wide range of heat source pressure and flow characteristics can be accommodated with little or no reconfiguration of the power plant controller.

While the present invention has been particularly shown and described with reference to preferred and alternate modes as illustrated in the drawings, it will be understood by one skilled in the art that various changes in detail may be effected therein without departing from the invention as defined by the claims.

## Claims

1. An organic rankine cycle power plant of the type having in serial flow relationship, an evaporator (13), a turbine (14) and a condenser (16), comprising:
a thermal source (11;19;28;34) for providing a flow of hot gases to a flow path passing through the evaporator (13); and
a control mechanism (18) comprising:
at least one modulation device (21;31) disposed within said flow path for selectively varying the flow of hot gases to the evaporator (13); and
a controller (18) for selectively adjusting said modulation device (21;31); **characterised in that**:
said controller (18) is adapted to provide a digital signal to said modulation device (21;31) to selectively enable or disenable said device, and
said controller is further adapted to provide an analog signal for selectively adjusting the position of said at least one modulation device (21;31) for the purpose of varying the flow of hot gases through the evaporator (13).

2. A power plant as set forth in claim 1 wherein said thermal source (19) includes a chimney or venturi for conducting the flow of hot gases from said thermal source (19) to ambient, and inducing a reverse flow of ambient air through the evaporator (13).

3. A method of controlling the flow of hot gases from a thermal source (11;19;28;34) to an organic rankine cycle power plant of the type having in serial flow relationship, an evaporator (13), a turbine (14) and a condenser (16), comprising the steps of: delivering a flow of hot gases from a thermal source (11;19;28;34) having particular pressure and flow characteristics to a flow path passing through the evaporator (13); and selectively varying the flow of hot gases to the evaporator (13) so as to accommodate the particular pressure and flow characteristics of said thermal source (11;19;28;34); wherein the step of selectively varying the flow of hot gases to the evaporator (13) includes providing at least one modulation device (21;31) disposed within said flow path for selectively varying the flow of hot gases to the evaporator (13), and a controller (18) for selectively adjusting said modulation device (21;31);
**characterised in that**:
said controller (18) is adapted to provide a digital signal to said modulation device (21;31) to selectively enable or disenable said device, and
said controller is further adapted to provide an analog signal for selectively adjusting the position of said at least one modulation device (21;31) for the purpose of varying the flow of hot gases through the evaporator (13).

4. A method as set forth in claim 3 and including the step of conducting the flow of hot gases from said thermal source (11;19;28;34) to ambient, rather than through the evaporator (13).

5. A power plant as set forth in claim 1 or a method as set forth in claim 3
wherein said at least one modulation device comprises a blower (21) fluidly connected on a downstream side of said evaporator (13).

6. A power plant as set forth in claim 5 or a method as set forth in claim 3
wherein said thermal source(19) includes a chimney or venturi upstream of said evaporator (13).

7. A power plant as set forth in claim 1 or 5 or a method as set forth in claim 3 or 5 wherein said at least one modulation device comprises a valve (31;36) fluidly connected on an upstream side of said of said evaporator (13).

8. A power plant or method as set forth in claim 7 wherein said valve (31) is normally open to fully bypass the flow of hot gases from said evaporator.

9. A power plant or method as set forth in claim 8 wherein said valve is a diverter valve (31) whose position is adjusted by said control to allow the flow of hot gases through said evaporator (13) in a controlled manner.

10. A power plant or method as set forth in claim 7 wherein said thermal source (28) is pressurized.

11. A power plant or method as set forth in claim 7 wherein said valve is a normally closed valve (36) which prevents the flow of hot gases to the evaporator (13).

12. A heat source control mechanism or method as set forth in claim 11
wherein said control (18) adjusts the position of said at least one modulation device to allow the flow of hot gases to the evaporator on a controlled basis.

13. A heat source control mechanism or method as set forth in claim 7
wherein said control provides a digital signal to enable both said blower (21) and said valve (31).

14. A heat source control mechanism or method as set forth in claim 7
wherein said control provides an analog signal to selectively vary the speed of the blower (21).

## Patentansprüche

1. Organisches Rankine-Kreisprozesskraftwerk der Bauart mit einem seriellen Strömungsverhältnis, einem Verdampfer (13), einer Turbine (14) und einem Kondensator (16), umfassend:
eine Wärmequelle (11; 19; 28; 34) zum Bereitstellen eines Stroms von heißen Gasen an einen Strömungsweg, der durch den Verdampfer (13) verläuft; und
einen Steuermechanismus (18), umfassend:
wenigstens eine Modulationsvorrichtung (21; 31), die in dem Strömungsweg angeordnet ist, um den Strom von heißen Gasen an den Verdampfer (13) selektiv zu variieren; und eine Steuereinrichtung (18) zum selektiven Einstellen der Modulationsvorrichtung (21; 31); **dadurch gekennzeichnet, dass**:
die Steuereinrichtung (18) dazu angepasst ist, ein digitales Signal an die Modulationsvorrichtung (21; 31) bereitzustellen, um die Vorrichtung selektiv zu aktivieren oder zu deaktivieren, und die Steuereinrichtung ferner dazu angepasst ist, ein analoges Signal zum selektiven Einstellen der Stellung der wenigstens einen Modulationsvorrichtung (21; 31) bereitzustellen, um den Strom von heißen Gasen durch den Verdampfer (13) zu variieren.

2. Kraftwerk nach Anspruch 1, wobei die Wärmequelle (19) einen Schlot oder ein Venturi-Element zum Leiten des Stroms von heißen Gasen von der Wärmequelle (19) an die Umgebung aufweist, und aufweisend einen Rückstrom von Umgebungsluft durch den Verdampfer (13).

3. Verfahren zum Steuern des Stroms von heißen Gasen von einer Wärmequelle (11; 19; 28; 34) an ein organisches Rankine-Kreisprozesskraftwerk der Bauart mit einem seriellen Strömungsverhältnis, einem Verdampfer (13), einer Turbine (14) und einem Kondensator (16), folgende Schritte umfassend: Leiten eines Stroms von heißen Gasen von einer Wärmequelle (11; 19; 28; 34) mit bestimmten Druck- und Strömungskennlinien an einen Strömungsweg, der durch den Verdampfer (13) verläuft; und selektives Variieren des Stroms von heißen Gasen an den Verdampfer (13) in Anpassung an die bestimmten Druck- und Strömungskennlinien der Wärmequelle (11;19;28;34); wobei der Schritt des selektiven Variierens des Stroms von heißen Gasen to the Verdampfer (13) das Bereitstellen von wenigstens einer Modulationsvorrichtung (21; 31), die in dem Strömungsweg angeordnet wird, um den Strom von heißen Gasen an den Verdampfer (13) selektiv zu variieren, und einer Steuereinrichtung (18) zum selektiven Einstellen der Modulationsvorrichtung (21; 31) einschließt;
**dadurch gekennzeichnet, dass**:
die Steuereinrichtung (18) dazu angepasst ist, ein digitales Signal an die Modulationsvorrichtung (21; 31) bereitzustellen, um die Vorrichtung selektiv zu aktivieren oder zu deaktivieren, und die Steuereinrichtung ferner dazu angepasst ist, ein analoges Signal zum selektiven Einstellen der Stellung der wenigstens einen Modulationsvorrichtung (21; 31) bereitzustellen, um den Strom von heißen Gasen durch den Verdampfer (13) zu variieren.

4. Verfahren nach Anspruch 3 und aufweisend den Schritt des Leitens des Stroms von heißen Gasen von der Wärmequelle (11; 19; 28; 34) an die Umgebung und nicht durch den Verdampfer (13).

5. Kraftwerk nach Anspruch 1 oder Verfahren nach Anspruch 3, wobei die wenigstens eine Modulationsvorrichtung ein Gebläse (21) umfasst, das in Fluidverbindung mit einer Stromabwärtsseite des Verdampfers (13) steht.

6. Kraftwerk nach Anspruch 5 oder Verfahren nach Anspruch 3, wobei die Wärmequelle (19) einen Schlot oder Lufttrichter stromaufwärts des Verdampfers (13) aufweist.

7. Kraftwerk nach Anspruch 1 oder 5 oder Verfahren nach Anspruch 3 oder 5, wobei die wenigstens eine Modulationsvorrichtung ein Ventil (31; 36) umfasst, das in Fluidverbindung mit einer Stromaufwärtsseite des Verdampfers (13) steht.

8. Kraftwerk oder Verfahren nach Anspruch 7 wobei das Ventil (31) normalerweise offen ist, um den Strom von heißen Gasen von dem Verdampfer umzuleiten.

9. Kraftwerk oder Verfahren nach Anspruch 8 wobei das Ventil ein Umleitungsventil (31) ist, dessen Stellung durch die Steuerung eingestellt wird, damit das Strömen von heißen Gasen durch den Verdampfer (13) auf geregelte Weise zugelassen wird.

10. Kraftwerk oder Verfahren nach Anspruch 7 wobei die Wärmequelle (28) unter Druck steht.

11. Kraftwerk oder Verfahren nach Anspruch 7 wobei das Ventil ein normalerweise geschlossenes Ventil (36) ist, das das Strömen von heißen Gasen zum Verdampfer (13) verhindert.

12. Wärmequellensteuermechanismus oder Verfahren nach Anspruch 11, wobei die Steuerung (18) die Stellung der wenigstens einen Modulationsvorrichtung einstellt, um das Strömen von heißen Gasen an den Verdampfer in geregelter Weise zuzulassen.

13. Wärmequellensteuermechanismus oder Verfahren nach Anspruch 7, wobei die Steuerung ein digitales Signal bereitstellt, um sowohl das Gebläse (21) als auch das Ventil (31) zu aktivieren.

14. Wärmequellensteuermechanismus oder Verfahren nach Anspruch 7, wobei die Steuerung ein analoges Signal zum selektiven Variieren der Drehzahl des Gebläses (21) bereistellt.

## Revendications

1. Centrale électrique à cycle de Rankine organique du type comportant en relation d'écoulement en série un évaporateur (13), une turbine (14) et un condenseur (16), comprenant :
une source de chaleur (11 ; 19 ; 28 ; 34) servant à produire un flux de gaz chauds vers une voie d'écoulement traversant l'évaporateur (13) ; et
un mécanisme de régulation (18) comprenant :
au moins un dispositif de modulation (21; 31) disposé dans ladite voie d'écoulement pour faire varier de manière choisie l'écoulement de gaz chauds vers l'évaporateur (13) ; et
un contrôleur (18) servant à ajuster de manière choisie ledit dispositif de modulation (21 ; 31) ; **caractérisée en ce que** :
ledit contrôleur (18) est conçu pour produire un signal numérique vers ledit dispositif de modulation (21 ; 31) afin d'activer ou de désactiver de manière choisie ledit dispositif, et
ledit contrôleur est en outre conçu pour produire un signal analogique servant à ajuster de manière choisie la position dudit au moins un dispositif de modulation (21 ; 31) dans le but de faire varier l'écoulement de gaz chauds à travers l'évaporateur (13).

2. Centrale électrique selon la revendication 1, dans laquelle ladite source de chaleur (19) comprend une cheminée ou des venturi servant à conduire le flux de gaz chauds de ladite source de chaleur (19) vers l'air ambiant, et induisant un écoulement inversé d'air ambiant à travers l'évaporateur (13).

3. Procédé de régulation de l'écoulement de gaz chauds à partir d'une source de chaleur (11 ; 19 ; 28 ; 34) vers une centrale électrique à cycle de Rankine organique du type ayant une relation d'écoulement en série, un évaporateur (13), une turbine (14) et un condenseur (16), comprenant les étapes suivantes : production d'un flux de gaz chauds à partir d'une source de chaleur (11; 19; 28; 34) où règne une pression et des caractéristiques d'écoulement particulières vers une voie d'écoulement traversant l'évaporateur (13) ; et variation choisie de l'écoulement de gaz chauds vers l'évaporateur (13) de manière à supporter la pression et les caractéristiques d'écoulement particulières de ladite source de chaleur (11 ; 19 ; 28 ; 34) ; l'étape de variation choisie des gaz chauds vers l'évaporateur (13) comprenant l'utilisation d'au moins un dispositif de modulation (21 ; 31) disposé dans ladite voie d'écoulement pour faire varier de manière choisie l'écoulement de gaz chauds vers l'évaporateur (13), et d'un contrôleur (18) servant à ajuster de manière choisie ledit dispositif de modulation (21 ; 31) ;
**caractérisée en ce que** :
ledit contrôleur (18) est conçu pour produire un signal numérique audit dispositif de modulation (21 ; 31) pour activer ou désactiver de manière choisie ledit dispositif, et
ledit contrôleur est en outre conçu pour produire un signal analogique servant à ajuster de manière choisie la position dudit dispositif de modulation (21 ; 31) dans le but de faire varier l'écoulement de gaz chauds à travers l'évaporateur (13).

4. Procédé selon la revendication 3 et comprenant l'étape de réalisation de l'écoulement de gaz chauds de ladite source de chaleur (11 ; 19 ; 28 ; 34) vers l'air ambiant, plutôt qu'au travers de l'évaporateur (13).

5. Centrale électrique selon la revendication 1 ou procédé selon la revendication 3, dans lequel ledit au moins un dispositif de modulation comprend une soufflante (21) raccordée pour le fluide sur un côté aval dudit évaporateur (13).

6. Centrale électrique selon la revendication 5 ou procédé selon la revendication 3, dans lequel ladite source de chaleur (19) comprend une cheminée ou un venturi en amont dudit évaporateur (13).

7. Centrale électrique selon la revendication 1 ou 5 ou procédé selon la revendication 3 ou 5, dans lequel ledit au moins un dispositif de modulation comprend une soupape (31 ; 36) raccordée pour le fluide sur un côté amont dudit évaporateur (13).

8. Centrale électrique selon la revendication 7, dans laquelle ladite soupape (31) est normalement ouverte pour contourner entièrement l'écoulement de gaz chauds à partir dudit évaporateur.

9. Centrale électrique selon la revendication 8, dans laquelle la soupape est une soupape de dérivation (31) dont la position est ajustée par ladite commande pour permettre l'écoulement de gaz chauds à travers ledit évaporateur (13) d'une manière contrôlée.

10. Centrale électrique selon la revendication 7, dans laquelle ladite source de chaleur (28) est pressurisée.

11. Centrale électrique selon la revendication 7, dans laquelle ladite soupape est une soupape normalement fermée (36) qui empêche l'écoulement de gaz chauds vers l'évaporateur (13).

12. Mécanisme de régulation de source chaude ou procédé selon la revendication 11, dans lequel ladite commande (18) ajuste la position dudit au moins un dispositif de modulation pour permettre l'écoulement de gaz chauds vers l'évaporateur selon une base contrôlée.

13. Mécanisme de régulation de source chaude ou procédé selon la revendication 7, dans lequel ladite commande produit un signal numérique pour activer ladite soufflante (21) et ladite soupape (31).

14. Mécanisme de régulation de source chaude ou procédé selon la revendication 7, dans lequel ladite commande produit un signal analogique pour faire varier de manière choisie la vitesse de la soufflante (21).
